# EUROPEAN PATENT APPLICATION

(11) **EP 1 632 524 A1**
(43) Date of publication of application: **08.03.2006**
(21) Application number: 03751418.9
(22) Date of filing: 09.10.2003
(51) Int. Cl.: C08J 9/12, E04B 1/80, E04B 1/66

(54) **FOAMED MATERIAL, METHOD FOR PRODUCTION THEREOF, CUSHIONING MATERIAL, THERMAL INSULATING MATERIAL AND STRUCTURE OF WALL OF BUILDING**

(30) Priority: 28.05.2003 JP 2003150795
(71) Applicant: MISAWA HOMES CO., LTD, Tokyo 168-8533 (JP)
(72) Inventor: KAMITE, Masayuki, c/o MISAWA HOMES CO., LTD, Tokyo 168-8533 (JP); ABIKO, Haruhiko, c/o MISAWA HOMES CO., LTD, Tokyo 168-8533 (JP); TABUCHI, Daisuke, c/o MISAWA HOMES CO., LTD, Tokyo 168-8533 (JP)
(74) Representative: Goddar, Heinz J.
(86) International application number: PCT/JP2003/012965
(87) International publication number: WO 2004/106418

(57) **Abstract**

A foamed material constituting a thermal insulator (360) which comprises 50 wt % or more of a non-resin component, preferably 50 to 70 wt % of a mixture of cellulose, starch and a poly(vinyl alcohol). In a more preferable embodiment, the foamed material contains 30 wt % of cellulose, 25 wt % of starch and poly(vinyl alcohol 2C, 0.7 wt % of an antioxidant, 0.2 wt % of a mildewproofing agent, 0.2 wt % of a pigment and 43.9 wt % of a polyolefm resin (2), wherein the antioxidant is a phenol type antioxidant having a melting point of 110°C being lower than that of the polyolefin resin.

## Description

### Field of Invention

The present invention relates to foamed material, method for production thereof, cushioning material, thermal insulating material and wall structure of building.

### Background Art

Until recently, in order to guarantee the thermal insulation between indoors and outdoors, thermal-insulating structure is applied to the walls of buildings. As the thermal insulated structure, a space is typically provided between the surface materials of the external wall and the inner wall, and then a thermal insulating material is inserted into this space. (Reference to Japanese Unexaminated Patent Publication No. 2000-320032)

As the thermal insulating material, the glass wool is mainly used in view of its advantages of lightweight and fire resistance. However, the glass wool has some problems. For example, when the moisture is absorbed by glass wool, the absorbed moisture is unable to release outside and it is kept inside. As a result, when the moisture penetrates to the glass wool from the indoor side with high humidity, the absorbed moisture can result in a dew condensation inside of the wall.

Then, it is proposed to use the foamed material, which is foamed from foaming materials comprising the resin components such as polypropylene etc, as the thermal insulating material instead of the glass wool.

However, when using the foamed material containing such kind of resin components, there are some problems that the cells in the foam do not uniformly disperse and the micro-cells cannot be formed. It is impossible to guarantee sufficient thermal insulating performances with those problems.

Therefore, it is desired to use the thermal-insulating material that is composed of foamed materials with high thermal-insulating efficiency.

As mentioned-above, the glass wool, as the thermal-insulating material, has the drawbacks that absorbing the moisture, being not able to remove it outside and keeping the moisture in its inside. As a result, when the moisture penetrates to the glass wool from the indoor side with high humidity, the absorbed moisture can result in a dew condensation inside of the wall which causes moldiness and the deterioration of the wall.

Therefore, in the wall structure, in order to prevent the moisture penetrating from indoor side to the glass wool, the moisture-preventing structure, which provides a moisture-preventing seat, is adopted at the surface material of inner wall that divides the indoors and the outdoors.

However, in this case that the indoor and the inside of the wall are isolated, when the indoors is hoter and humider than the inside of the wall, dew condensation occurs on the surface of the interior side of the inner wall to cause moldiness. In addition, when the inside of the wall is hoter and humider than the indoors, dew condensation will occur inside of the wall. Hereby, it is required to modulate the humidity between inside of the wall and the indoor.

Furthermore, the same problems also occur in the same way in the wall structures of the buildings built by the construction methods, such as panel construction method, unit construction method and common construction method. Therefore, it is desired to have a kind of wall structure that can modulate the humidity between the indoor and the inside of the wall of the buildings, and at the same time the thermal insulation between outdoor the indoor can be guaranteed.

As mentioned-above, mineral fibers such as glass wool and rock wool, and the plastic foamed materials such as polyurethane, polystyrene foam and polyphenol foam etc, are used as the thermal- insulation materials of the buildings.

When this kind of buildings reach the end of their use purpose and are undergone repairing and dismantling, those thermal insulating materials are disused. Because the structure of the buildings consists of the iron, wood materials and the concrete etc, it is necessary to separately decompose the thermal insulating materials, according to the law of recycling of the construction disusing materials. Especially, in the case of the wooden buildings, the thermal insulating materials were usually placed in the pillars and the beams by various means. In this case, it will take lots of labor to dismantle those materials.

On the one hand, in the case of transporting the precise equipments such as electronic equipments and electronic parts etc, and some goods like fruits that are fragile, those equipments and good are generally packaged in the cardboard box and transported, and the cushioning materials are put together for protecting the equipments and the goods from the impact outside. Like the thermal insulating materials, the plastic foaming materials are used as the cushioning materials. This kind foaming material are formed by foaming the foam materials which contain the resin components such as polypropylene etc. with the fluids for foaming such as water. Inside of this kind foaming material, there are small interspaces referred to as cells.

After finishing the transportation and removing out the equipments inside, this kind of the cushioning materials are also treated as the wastes (the rubbish) if they are not reused for the transportation.

However, this kind of foamed material contains at least no less than 50wt% of the resin components such as polypropylene etc which usually cannot be treated as the general rubbishes. For this reason, it is necessary to recycle this kind of foaming material as the resin (the plastic) according to the regulation of the law for container recycling. Therefore, many measures, such as the preparation of the special facility for recycling or the entrusting to the outside should be taken, resulting in higher cost.

In addition, it is expected to have better thermal insulation effect for the thermal insulating material. Furthermore, as for the cushioning material, in addition to the function which absorbs original impact, it is required to provide much more thermal insulation function between inside and outside when the temperature outside becomes high , because it is used as the material for the protection of the equipments and the fruits etc. which are sensitive to high temperatures. This kind of problem is not just for the thermal insulating material and the cushioning material, it also occurred in the same way even with the foamed material that is used for other purpose.

Therefore, the foamed material, the thermal insulating material and the cushioning material with improved thermal insulation efficiency are desired, and at the same time, it is also required that they can be conveniently treated with the low cost when they are out of use.

### Disclosure of the present invention

An object of the present invention is to provide foamed material, cushioning material and thermal insulating material with high thermal insulation performance.

Another object of the present invention is to provide foamed material, thermal insulating material and cushioning material, which can be conveniently treated with the low cost when they are out of use.

The foamed material of the present invention is characterized in that the foamed material is obtained by foaming the foaming material containing resin components with the foaming fluid, and the said foaming material contains said resin components and at least no less than 50wt% of non-resin components including at least cellulose.

Preferably the said non-resin components include the cellulose and the starch, and the content of the said cellulose is largest in the said foaming material. The content of the cellulose and the resin component will be described detailedly later.

According to the present invention, for the foamed material consisted of the thermal insulating material, it is possible to lower the thermal conductivity and improve the thermal insulation efficiency by containing the cellulose, in comparison with the prior resin foaming material.

In details, the cellulose can be strong by the hydrogen bonds of the fibers and also becomes the interlaced bundles with the spaces at the same time. During the mixing refining by using extrusion molding as mentioned-above, due to the foaming fluid added, when the foaming fluid enters into the spaces to form the mixing refining substance and is extruded at the high temperatures and high pressures, the hydrogen bonds of cellulose fibers is cut off in the presence of the foaming fluid and the fiber becomes disjointed, and the cells are formed duo to the expansion of the fibers at the same time. With foaming by the foaming fluid, the foaming fluid, which is in the spaces between the fibers, evaporates and the cell space is formed. Duo to the evaporation of the foaming fluid, the hydrogen bond is formed again and the space with the air is formed. With the hydrogen bond, the surface of the cellulose is strongly hydrophobic and well compatible with the resin component in the foamed material. When the foaming is proceeded at high temperatures of approximately 160-200°C, the resin component melts and covers the bundle of the fiber of the cellulose.When the hydrogen bond is cut off, the fiber becomes disjointed. When the hydrogen bond is formed again, the micro space (the cell) which contains the airis formed, and the resin component covers the cellulose fiber. When the molding substances are formed with the competition of these three reactions, the air can be shutted in the apertures of the fibers. Accordingly the thermal conductivity is lowered and the thermal insulation is improved.

### [cellulose]

The said cellulose is preferably the pulverized cellulose type grain prepared by pulverizing the roughly crushed plant cellular substance.

The suitable plant cellular substance used as the said cellulose is, for example, lumber, vacas and straw/leaf etc can be appropriately used in this case.

In addition, the said cellulose may be powder or granule obtained by pulverizing the waste paper.

In this case, the production cost of the foamed material can be reduced, because the unused waste paper is used as the cellulose.

In addition, by pulverizing the waste paper into powder or granule, it is possible to smoothly supply it to the extrusion-molding machine and to improve the operating efficiency.

Furthermore, by using the paper cellulose, the micro cell is formed in the foamed material, and then it is possible to further improve the thermal insulation efficiency of the thermal insulating material.

Still furthermore, the cellulose preferably has a grain size of larger than 30 meshes, and more preferably of 60 meshes or more. When the grain size of the cellulose is 60 meshes or more, it is possible to form is formed more micro cells in the foamed material.

On one hand, as for the cellulose, it is preferred for grain size to be less than 400 meshes. If the grain size of the cellulose which is the granular mixture of the raw materials does not pass 30 meshes, it is hardly to obtain the foamed material in which the cells with sufficient size are formed. In addition, if the grain size passes 400 meshes, the raw materials supply and the operating efficiency in the mixing refining could become bad.

Furthermore, in order to further increase these effects, it is more preferred that the grain sizes of the cellulose are in the range of 175-325 meshes.

### [ The starch or polyvinyl alcohol ]

As the starches, various starches such as cornstarch, sweet potato starch, potato starch, tapioca starch, rice starch and wheat flour starch can be adopted.

In this invention, because the foaming material contains at least one of the starch or polyvinyl alcohol, it is possible to uniformly disperse the foaming fluid in the foaming material. Therefore, the foamed material has the properties of high thermal insulation or cushioning characteristics due to the uniform dispersion of the cell therein.

In this invention, it is preferred that the foaming material contains no less than 50wt% mixture which consists of at least one of the starch or polyvinyl alcohol and cellulose.

For example, when the mixture contains only the starch and the cellulose, because the resin component in the foaming material is below 50wt%, it is not the component of the recycling object based on the container recycling law and can be treated as the general rubbish. Therefore, it is not necessary to devise the special measure for recycling, so it can be simply treated with low cost.

In addition, even in the case of containing polyvinyl alcohol, if the content of the resin component in the foaming material (poly-vinyl alcohol and the polyolefin typeresin) is below 50wt%, it can be treated as the general rubbish. In this case, it can also be simply treated with low cost.

In this invention, it is preferred that the said cellulose and the starch or poly- vinyl alcohol are the mixture with the granular particles.

In this case, since the cellulose and the starch or polyvinyl alcohol are formed as the mixture of powder granular particles beforehand, in comparing with the case of adding the raw materials separately, the supply of the raw materials to extrusion molding machine can be smoothly and the operating efficiency can be improved.

### [ The resin component ]

As the resin components, polyethylene (PE), polypropylene (PP), polyamide (6-nylon and 6, 6-nylon etc.; PA), polyethylene terephthalate (PET) and biodegradable plastic such as poly lactic acid can be used.

As the polyolefin type resins, for example, polyethylene and polypropylene etc. can be used. Wherein, the resin component is preferably the polypropylene resin.

The polypropylene (PP) is superior in processability and machine aptitude etc in comparison with the other resin component. Therefore, the foamed material can be conveniently produced from PP.

Since the resin in the foaming material is polyolefin resin the foamed material does not generate any noxious gas when burnt in the treating process, and is an environment friendly thermal insulating material.

### [ Additive - antioxidant ]

In this invention, the said foaming material contains antioxidant. It is preferred that the fusion point of the said antioxidant is lower than that of the polyolefin type resin.

In the formation of the foamed material, as for the polyolefin type resin which covers the cellulose, there is a possibility of the formation of micro cracks due to the sudden pressure change at foaming. As for the part of the micro crack, because the polyolefin type resin is cut off, the oxidation and reduction by oxygen radical are easy to occur and the polyolefin type resin could easily collapse. Such that, when the antioxidant is not added, there is a possibility that the foamed material entirely collapses due to the spread of this micro crack with time lapse. As for this problem, in this invention, growth of the micro crack can be controlled because of the addition of the antioxidant.

In addition, because the fusion point of the antioxidant is lower than that of the polyolefin type resin, the antioxidant melts when the foaming material is formed. Because of this, the antioxidant can be dispersed uniformly in the foaming material, and the foamed material where the antioxidant is dispersed uniformly can be obtained. Therefore, it is possible uniformly to prevent the growth of the micro crack over whole foamed material.

In this case, the content of the said antioxidant preferably is 1.5wt% or less based on the weight of the said foaming material.

Because the content of the antioxidant is designated as 1.5wt% or less in the foaming material, it is possible to prevent the increase of the cost, in addition to exerting the effect of the antioxidation sufficiently
In this invention, 0.2 or more weight parts of the antioxidant is added relative to 100 weight parts of the resin component. This kind antioxidant is preferably the mixture of the phenol antioxidant and the phosphite antioxidant in the ratio 1/2 by weight.

When the addition quantity of the said antioxidant is less than 0.2wt%, sufficient durability cannot be guaranteed for the produced foamed material. In addition, as for the combination of the antioxidants, if the weight ratio of phenol antioxidant to phosphite antioxidant is not 1/2, sufficient durability of the foamed material cannot be guaranteed.

Herein, at the time of forming the foamed material, when foaming resin component with the explosive evaporation of the vapor, it is possible to form micro cracks in the resin component which covers the cellulose, due to the sudden pressure change at foaming. In the part of the micro cracks, because the resin is cut off, the oxidation and reduction by oxygen radical are ready to occur and the resin could easily collapse. Such that, when the antioxidant is not added, it is possible that the foamed material entirely collapses due to the spreading of the micro cracks with time lapse. Therefore, the growth of the micro cracks can be controlled by the addition of the said antioxidant.

### [Additive - fire retardant]

When the fire retardance of the said resin component is necessary, it is preferred that 5 weight parts of fire retardant are added to 100 weight parts of resin component.

The said fire retardant can be phosphorus type, bromine type, chlorinated paraffin and antimony trioxide, and it is more preferable that it includes at least one of them.

If such constitution is used, the sufficient fire retardance of the produced foaming material can be granted. As the phosphorus-type fire retardant, for example, it can be triphenyl phosphate, tri-o-cresyl phosphate, trixylyl phosphate, trimethyl phosphate, triethylphosphate, cresyl diphenyl phosphate, 2-ethylhexyl diphenyl phosphate, and triallyl phosphate, and other aromatic phosphate, aromatic condensed phosphoric acid ester, tris-dichloropropyl phosphate, tris-β-chloropropyl phosphate, and halogen containing phosphoric acid ester, halogen containing condensed phosphoric acid ester, polyphosphoric ammonium/amide, and polyphosphoric acid, red phosphoric acid and phosphorus-nitrogen composition system etc.

As the bromine type fire retardant, for example, tetrabromobisphenol A (TBA), the TBA-epoxy oligomer/polymer and the TBA-carbonate oligomer, TBA-bis (2,3-dibromopropylether), TBA-bis (allyl ether), tetrabromobisphenol S (TBS), TBS-bis (2,3-dibromopropylether), the hexabromobenzene (HBB), pentabromo toluene, hexabromocyclododecan (HBCD), decabromodiphenyloxide (DBDPO), octabromodiphenyloxide (OBDPO), ethylene-bis-(pentabromophenyl), ethylene-bis(tetrabromophthalimide), tris-(tribromophenoxy)-triazine, brominated polystyrene, octabromotrimethylphenylindan, pentabromobenzylacylate and polydibromophenylenoxide, bis-(tribromophenoxyethane) can be chosen.

### [ Additive - lubricant ]

In the said resin component, it can be adopted that 0.2-0.5 weight parts of the fatty acid amide lubricant 3 is added based on 100 weight parts of the resin component.

When the addition quantity of fatty acid amide lubricant is less than 0.2 weight parts, the foamed material with fine cells cannot be formed. However, when it is more than 0.5 weight parts, there is a fault that the foaming is not sufficient.

As the foamed material with fine cells can be produced by using this kind of fatty acid amide lubricant, the production efficiency can be improved. Furthermore, the moisture in the air can be absorbed and the foamed material itself possess the function of modulating humidity by using the fatty acid amide lubricant, and the electrification of the foamed material can be prevented. Accordingly, the adsorption of the dust can be prevented.

In the said resin component, it is possible to adopt the constitution in which the ratio of the talc 3A to this resin component is 1-2 weight parts of the talc 3A to 100 weight parts of the resin component.

When the addition amount of the talc is less than 1 weight parts, the foamed material with fine cells cannot be formed. However, when it is more than 2 weight parts, there is a fault that the foaming is not sufficient. As the foamed material with fine cells can be produced by using this kind of talc, the production efficiency can be improved.

### [ Production]

During producing the foamed material, for example, the following procedures by using the extrusion-molding machine can be adopted. Namely, first, the foaming material and the foaming fluid are supplied into the cylinder of the extrusion-molding machine. Next, while heating the cylinder, pressurizing both raw materials with screw inside the cylinder is done and the mixture is mix-refined, and then the mix-refined material formed is transported to the die side. When the mix-refined material that has been transported to the die side is pushed out from the die side, because it is decompressed suddenly, the cells are formed inside the resin component due to the fact that the fluid that has been condensed evaporates explosively. The foamed material produced in this way is then cut out appropriately to form the thermal insulating material with a specified shape such as plate-shaped.

As a fluid for foaming, for example, water and the oil etc can be used.

By using water as the foaming fluid, it is possible to reduce the production cost of the thermal insulating material.

As for the foamed material of the thermal insulating material in this invention, it is preferred that the expansion ratio of the foaming is 20 times or more and 100 times or less. With the high expansion ratio of the foaming in the range of 20-100 times, higher thermal insulation efficiency can be guaranteed.

### [ Cushioning material and thermal insulating material ]

This invention relates to the thermal insulating material characterized in that it is constituted by the said foamed material , and it is possible to achieve the same effect as the said foaming material.

This invention relates to the cushioning material characterized in that it is constituted by the said foamed material.

According to this invention, it is possible to achieve the same effect as the said foamed material. That is, for example, when the foamed material is used as the cushioning material for the protection of the equipments, it plays the function of absorbing the concussion to the equipments, and at same time it also provide the function of preventing the heat transferring to the equipments.

In detail, the thermal insulating material in this invention consists of the foamed material which is obtained by foaming the foaming material containing polyolefin-based resin with the foaming fluid. Wherein, the said foaming material contains at least one of the starch or polyvinyl alcohol, and the said polyolefin based resin and the cellulose. The content of the non-resin mixture that consists at least one of the said starch or polyvinyl alcohol and cellulose is more than 50wt% in the said foaming material.

### [ wall structure ]

The other object of this invention is to provide a wall structure of the buildings which not only guarantees the thermal insulation between indoor and outdoor, but also modulates the moisture between the indoor and inside of the wall.

This invention relates to a wall structure of the buildings characterized in that the thermal insulating material is setup between the inner wall surface material and the external wall surface material, wherein the said thermal insulating material consists of the foamed material which is produced by foaming the material comprising the resin component, the cellulose and the starch with the water. In this forming material, the ratio of the said cellulose is largest by weight.

According to this invention, because of using the foamed material in the wall structure, it is able to guarantee sufficient thermal insulation efficiency due to the cells which is formed in the internal of the foamed material, and it is also sufficiently available as a thermal insulating material.

In addition, because the foamed mterial contains the cellulose, in comparison with the former resin foamed material, it is possible to lower the thermal conductivity and to improve the thermal insulation efficiency.

In addition, because the thermal insulating material contains the cellulose, it possesses the function of modulating humidity. When the humidity is high, it can absorb the moisture, and when the humidity is low, it discharges the moisture.

For example, it is possible to modulate the humidity between the indoor and inside of the wall by using the permeable material as the inner wall surface material. Therefore, it can prevent the dew condensation on the surface of the inner wall surface material, and to improve the durability of wall structure. In addition, habitability indoor can be improved with the function of modulating humidity. Furthermore, because the humidity of the indoor can be maintained in this way, it becomes difficult to be the static electricity for the surface of the material exposed to the indoor side, and the adhesion of the soiling dust can be prevented.

Here, it is preferable to setup the moisture permeable surface material, which is exposed to the indoor, on the indoor side of the said inner wall surface material. As a moisture permeable surface material, the paper cross and the plaster cross etc, which have the moisture permeability, can be adopted.

In this case, because moisture permeability between the indoor and the inside of the wall can be realized, the humidity of the indoor and the inside of the wall can be uniformly maintained, and the dew condensation inside the wall structure which is difficult to be discovered can be securely prevented.

It is preferable to provide the moisture permeable and waterproof seat in the external side of the said external wall surface material. Herein, as the moisture permeable and waterproof seat, for example, products with commercial name of "Tie Beck" (made by the Dupont corporation) etc can be adopted.

In this case, because the moisture from the indoor is not kept in the thermal insulating material and it can escape to the outside of the room through the moisture permeable and waterproof seat, the dew condensation inside the wall structure does not occur. In addition, in the case of the outside of the room being the outdoor, the penetration of the rainwater from the outdoor can be prevented with the waterproof seat and the wall structure can be protected.

As above-mentioned, it is preferable that the said thermal insulating material can be plate shaped with various thickness and types. In this case, the thermal insulating material suitable for the climates and natural conditions and with moderate thermal insulation efficiency is preferably adopted to decrease the cost.

### [ Brief explanation of the drawings ]

Figure 1 shows the building according to the first embodiment of this invention.
Figure 2 shows the longitudinal section of the wall panel which forms the wall structure of the building of the first embodiment.
Figure 3 is the outside view that shows the foamed material, which makes up of the thermal insulating material of the first embodiment.
Figure 4 shows the extrusion-molding machine, which produces the said foamed material by using the foaming material of the first embodiment.
Figure 5 shows the results of the examples 2-1, example 2-2 and the reference example of this invention.
Figure 6 shows the constitution of the wall panel of the example 3-1 of this invention.
Figure 7 shows the constitution of the wall panel of the comparative example 3-1 of this invention.
Figure 8 shows the constitution of the wall panel related to the comparative example 3-2 of this invention.
Figure 9 is the outside view that shows the foamed material according to the second embodiment of this invention.
Figure 10 is the outside view that shows the foamed material in pattern according to the deformation example of this invention.

### [ Preferred embodiments of the invention ]

Hereinafter, the preferred embodiments of the invention will be explained in reference to the drawings.

### [ the first embodiment ]

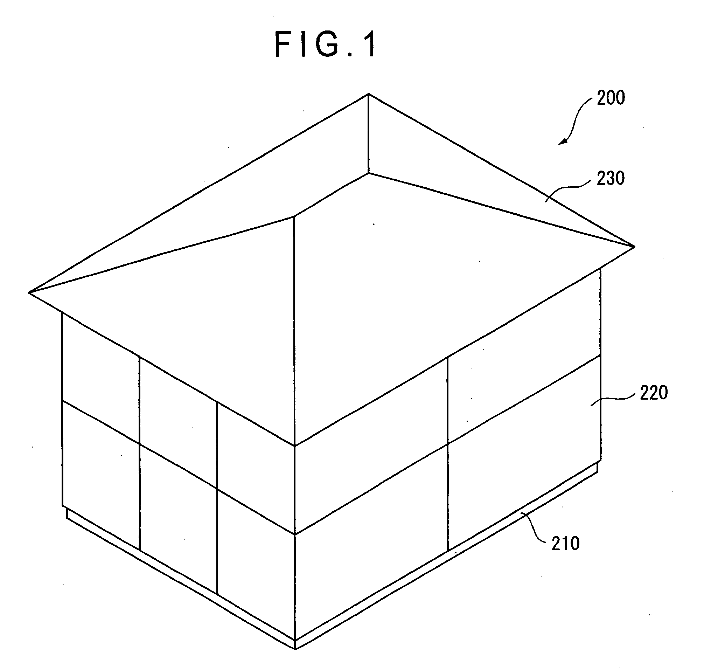

Figure 1 shows the building according to the 1st embodiment of this invention. This embodiment is based on the wall structure of this invention in which the foamed material of this invention is used as the thermal insulating material and the sound insulator.

### [ Wall structure of the building ]

In figure 1, building 200 is a building of two floors, which is composed of the building itself 220 which is built on the fundamental 210 and the slope roof 230 formed by providing the roof panel over the building itself 220.

Building itself 220 is the wall structure of this invention produced on construction site by the ligneous panel construction method of joining plural connecting wall panels which are made and standardized beforehand at the factory. Furthermore, the slope roof 230 is also constituted with the panel construction method.

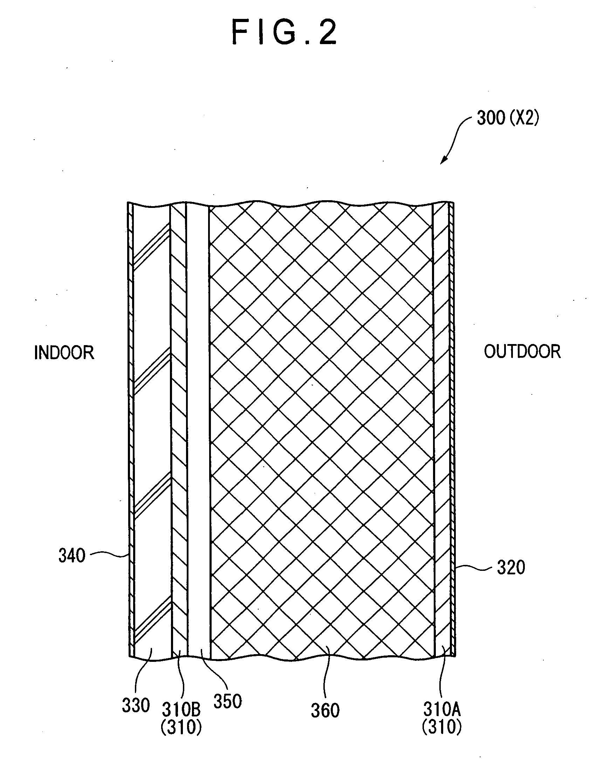

Figure 2 shows longitudinal section of the wall panel 300 which forms wall structure.

As for wall panel 300, referring to figure 2, it includes a pair of plywoods 310 which are stuck to the out side the indoor side of the core material of framework (illustration omitted), the moisture permeable and waterproof seat 320 and gypsum board 330 which is used as the inner wall surface material. Wherein the said moisture permeable and waterproof seat 320 is stuck to the plywood 310A, which is one of the plywood 310 and is located at the outdoor-side, and the said gypsum board 330 is stuck to the plywood 310B, which is the other one of the plywood 310 and is located at the indoor-side.

In addition, in the outdoor-side of the moisture permeable and waterproof seat 320 (illustration omitted), the siding board as an external wall surface material is setup through the specified body frame.

On the indoor-side of gypsum board 330, the plaster cross 340, like the paper cross which has moisture permeability, is stuck and this plaster cross is exposed to the indoor.

An air layer 350 contacting to the indoor-side plywood 310B is provided in the inside of a pair of plywoods 310, and at the same time a thermal insulator 360 is setup at the outdoor-side of the plywood 310A and contacts to the air layer 350.

As for the plywood 310A which consists of the outdoor-side of the plywoods 310, the thickness can be 5.5mm. In addition, as for the plywood 310B of indoor-side, the thickness can be 4.0mm.

The moisture permeable and waterproof seat 320 possesses moisture permeability and waterproof characteristics. In this embodiment, "Tie Beck" (commercial name, made by the Dupont corporation), which is olefin-based resin, is adopted.

The gypsum board 330, for example, with the thickness of 12.5 mm can be adopted. The air layer 350 can be composed of the space with the thickness of 6-35 mm.

In addition, as the thermal insulator 360, for cold regions (for example, I area) and for the climates and natural conditions, the plate shaped ones 75mm thick can be adopted. In addition, for example, plural types such as plate shaped ones with the thickness of 50mm and 100mm etc can be used.

### [ The foamed material as the thermal insulating material ]

Hereinafter, the foamed material 100A, which forms the thermal insulator 360, is explained.

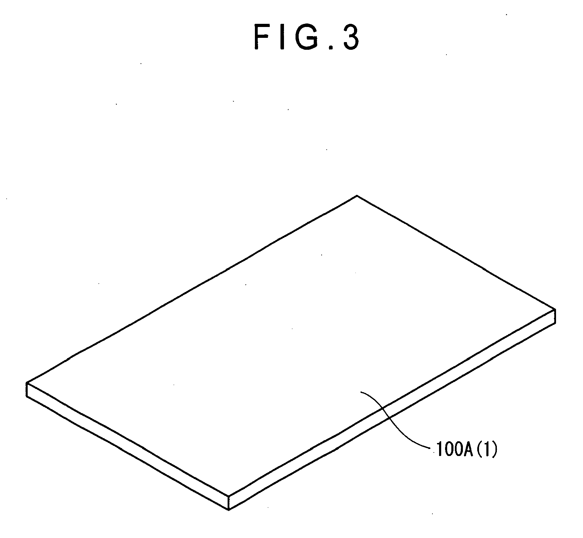

Figure 3 is the outside view which shows the foamed material 100A.

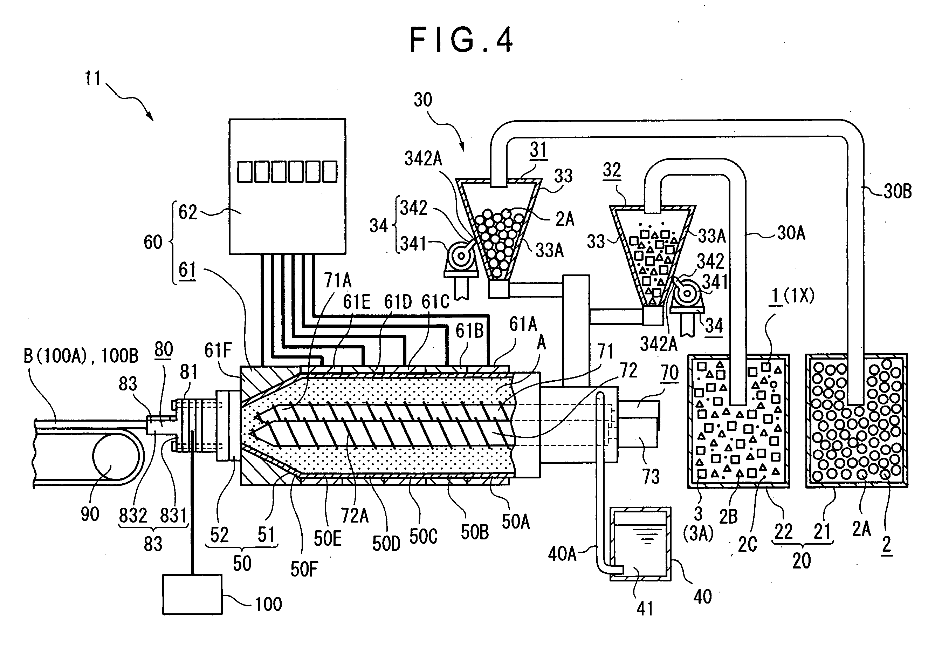

Figure 4 shows the extrusion-molding machine 11, which produces the foamed material 100A by using the foaming material 1.

The foamed material 100A with the air gap (the cell) in its inside is formed by foaming the foaming material 1 which contains the thermoplastic resin with water 41 which is the foaming fluid, and then the plate shaped foamed material 100A with specified size is formed. Forming expansion ratio of this foamed material 100A is in the range of 20-100 times, and preferably 30- 80 times.

In addition, the compression strength of this foamed material 100A is approximately 0.2 kg f/cm² (equivalent to 0.0196 MPa).

As shown in figure 4, the foaming material 1 contains 50wt% or more of the mixture of cellulose, starch and polyvinyl alcohol, and preferably 50wt% to 70wt%.

For example, the foaming material 1 contains 30wt% cellulose, 25wt% starch and polyvinyl alcohol 2C, 0.7wt% antioxidant, 0.2wt% anti-moldy agent, 0.2wt% pigment and 43.9wt% polyolefin based resin 2. In this embodiment, the antioxidant, the anti-moldy and the pigment are referred to as additive 3.

As for the cellulose, the waste papers, such as unused stamps, postcards and magazines can be used as the raw materials. The waste papers are pulverized by various crushers such as the ball mills, and screened and classified manually or automatically by using the screen of J I S standard. The grain size is in the range of passing 60 meshes and at the same time not passing 400 meshes.

In addition, as for the starch, for example, the cornstarch can be used. The starch and the cellulose after being mixed are formed to paper grain blend 2B, which was processed to pellet shape.

Polyvinyl alcohol 2C is formed as powder. As the polyolefin based resin 2, for example, the polypropylene 2 A with the melting point of 160°C can be adopted. This polypropylene 2A can be in other forms such as powder and pellet shape.

Furthermore, in this embodiment, the content of the resin component in the foaming material 1 is less than 50wt%.

In addition, the antioxidant, for example, can be the phenol based antioxidant with the melting point of 110°C, which is lower than the melting point of polyolefin type resin 2. Herein, as for this kind of phenol-based antioxidant, it can be tetraester-based hindered-phenol with high-molecular weight and those containing high molecular weight hindered-phenol.

In addition, it is also possible to add the thioether-based antioxidant and the phosphite-based antioxidant etc to this kind of phenol antioxidant.

### [ The production equipment of the foamed material ]

Hereinafter, the extrusion-molding machine for producing the foamed material 100A will be explained.

The extrusion molding machine 11, as shown in figure 4, is equipped with the raw materials tank 20 for supplying the foaming material 1, the silo 30, the fluid tank 40, the cylinder 50, the heater 60, the screw 70 that is setup in the inside of the cylinder 50, the die 80, the belt-conveyer 90 and the temperature controller 100 for controlling the temperature of the die 80 in the range of 160-220 °C.

The raw material tank 20 is a container, which accepts the raw materials composed of the foaming material 1. It is equipped with the first tank 21 that accepts the polypropylene 2 A, and the second tank 22 that accepts the paper grain 2B, the polyvinyl alcohol 2C and the additive 3.

The silo 30 is used for temporarily accepting each raw materials 2A, 2B, 2C and 3 supplied from the raw material tank 20, and automatically providing the pre-defined amounts of each raw materials 2A, 2B, 2C and 3 to the inside of cylinder 50. This silo 30 is equipped with the first silo 31, which is connected to the first tank 21 through the piping 30A, and the second silo 32, which is connected to the second tank 22 through the piping 30B.

The first silo 31 is used for temporarily accepting polypropylene 2A and providing polypropylene 2A to the inside of cylinder 50. The first silo 31 is equipped with the silo itself 33 in which the taper is formed in cone-shaped, and the vibrator 34 which vibrates the side part 33A of the silo itself 33 by punch striking intermittently. Furthermore, because polypropylene 2A has relatively high flow ability, it is possible not to equip the vibrator 34.

The vibrator 34 is equipped with motor 341 and the cam 342 that is installed in the motor 341, and the cam 342 turns under the drive of motor 341. The front end 342A of the cam 342 periodically strikes the side part 33A of the silo itself 33. With the vibration of the side part 33A of the silo itself 33 , polypropylene 2A in the inside of silo itself 33 can be disintegrated even adhering each other, , and falls along the taper of cone-shaped into the cylinder 50.

The second silo 32 is used for temporarily accepting the paper grain 2B, polyvinyl alcohol 2C and additive 3, and supplying these raw materials 2B, 2C and 3 into the cylinder 50. It is also equipped with the silo itself 33 and vibrator 34 as the first silo 31 mentioned-above.

The fluid tank 40 is used for accepting the water 41 that is the fluid for foaming, and supplying water 41 into the cylinder 50 through the piping 40A connecting the silo 30 with the screw 70.

The cylinder 50 is a hollow box and used for accepting the foaming material 1 supplied from silo 30, and the water 41 supplied from the fluid tank 40. It is equipped with the cylinder itself 51 and the discharge section 52 which is located on the left side of this cylinder itself 51 in figure 4.

The cylinder itself 51 (omitted in the figure) is formed by an elliptic open part for discharging the mixing material A, which is the refined-mixture of the raw materials 1 and 41, and in total four bolt holes in which each two is setup on the top and bottom side of the elliptic open part.

In the discharge section 52, the said open part and four boltholes are provided, and at the same time, the inset holes (not illustrated in the figure) fitting a part of the die 80, are formed.

The heater 60 is used for independently heating the six parts(50A-50F) of the cylinder 50, respectively, and is equipped with six heaters itself 61 (61A - 61F) that are installed in the each part of 50A - 50F of the cylinder 50, and the control section 62 for respectively controlling the temperatures of these six heaters itself 61 (61A - 61F).

In detail, in the six parts 50A - 50F of the cylinder 50, as shown below, from the right side of figure 4 in sequence, the temperatures have been setup to six stages. Furthermore, the temperature setting differs and depends upon the raw materials, the percentage of water content in the raw materials and the meteorological condition etc.
(1) At the first part 50A: 80°C (initial temperature)
(2) At the second part 50B: 145°C
(3) At the third part 50C: 185°C
(4) At the fourth part 50D: 175°C
(5) At the fifth part 50E: 170°C
(6) At the sixth part 50F: 230°C (final temperature)

Furthermore, in the heater itself 61, the setting temperatures and the temperatures measured actually of each part of 50A - 50F are displayed.

The screw 70 is used for mix-refining the foaming material 1 and the water 41 supplied into the cylinder 50, transporting this refined-mixing material A and discharging it outside through the discharge section 52 of the cylinder 50. It is equipped with two screws itself 71, 72 and the driving section 73 which turns these two screws itself 71 and 72, and has two-axial structure.

These two screws itself 71 and 72 are such setup that they are adjoined in parallel mutually in the cylinder 50. In the two screws itself 71 and 72, the respective screw threads 71A and 72A are formed. These screw threads 71A and 72A are faced in the same direction.

The driving section 73 is used for turning the two screws itself 71 and 72 in the direction approached mutually.

Therefore, in the cylinder 50 where the refined-mixing material A is supplied, when these two screws itself 71 and 72 turn to the same direction by the drive of the driving section 73, the refined-mixing material A is conveyed to the discharge section 52 side by the screw threads 71 A and 72 A.

The die 80 is a metal made part with the function of forming the foamed material B, where the air gap in the mixing material A that is discharged from the discharge section 52 of the cylinder 50. It is equipped with the first block 81 that is constituted by four components and the second block 83, which is installed on the discharge side of the first block 81.

The first block 81 is used for making the air gap in the conveyed refined-mixing material A and forming the foamed material B. Among the four components which form the first block 81, the part of right edge side in the figure is the part which is fitted to the said embedded holes of the discharge section 52, and the small plural holes are formed in the part of left edge side in the figure (not shown in the figure) in order to push out the refined-mixing material A.

The second block 83 is equipped with the plate shaped substrate 831, which is installed in the part of left edge side in the figure of the first block 81, and the box shaped forming part 832, which is hollow at the substrate 831 and has the suitable length in the extrusion direction. The second block 83 is used to form the foamed material B has the specified cross section.

The belt conveyer 90 is used for conveying the foamed material B that is discharged from the ejection side open part 832B of the second block 83 that constitutes the die 80, and at the same time for roughly cutting the foamed material B.

During conveying by the belt conveyer 90 ( illustration omitted), the press roller, which is used for adjusting the thickness of the products, and the cutter for roughly cutting are provided. This roughly cutting cutter is used for adjusting the width of the products with the conveying speed of the conveyer 90. The cooling fan for cooling the foamed material B and the cutting device for cutting the foamed material B are also provided. By these devices, the foamed material B after being formed as the thermal insulating material, which is the final product, is kept in the specified box for use.

### (Production procedure of the foamed material)

Herinafter, the production procedure of the foamed material 100A is explained.
<1> With each vibrator 34, while hitting the side part 33A of the silo itself 33 with the front end of the cam 342, the specified amount of the polypropylene 2A from the first silo 31, and the specified amount of the raw materials 2B, 2C and 3 from the second silo 32 are supplied into the cylinder 50. On the other hand, the specified amount of the water 41 from the fluid tank 40 is supplied into the cylinder 50 through the supplying route of the raw materials between the screw 70 and the silo 30.
<2> Each raw materials 2 A, 2 B, 2C and water 41, which are supplied to the part of the screw 70 inside the cylinder 50, are mix-refined by the rotation of the screw 70, and become the refined-mixing material A which is then conveyed to the die 80.
   In this moment, the polypropylene 2A is heated by the heater 60. When reaching or exceeding the melting point of 160°C, namely, when being carried to the parts after the third part 50C, the polypropylene 2A melts completely.
   Polyvinyl alcohol 2C becomes non-crystal state at the point below the glass transition point, and it will be uniformly dispersed in the polypropylene 2A. In addition, the phenol-based antioxidant in the additive 3 melts at the point when exceeding the melting point of 110°C thereof and will be uniformly dispersed in the polypropylene 2A. The paper grain 2 B and other additive 3 besides the antioxidant, are also uniformly dispersed in the melted polypropylene 2A.
<3> On the one hand, the water 41 is heated by the heater 60, but it does not evaporate completely at the first place 50A and is still in liquid state mostly, because the temperature is set at 80°C at the position of this first place 50A of the cylinder 50. After that, it is heated above the evaporation temperature and evaporates at the position after the second place 50B, and evaporates to steam. But the steam condenses due to the high pressure in the place between the cylinders 50, the conveyed raw materials and the die 80. Such that, the refined-mixing material A contains the mixture of the steam and the liquid.
<4> By the rotation of the screw 70, the refined-mixing material A, which is discharged from the cylinder 50, is adjusted to a specified temperature by the temperature controller100, and is pushed out in plural long threadlike shape from the said plural small holes which are formed in the first block 81. In this case, the long threadlike shaped refined-mixing material A, which passes the said small holes, is explosively to foam by decompressing suddenly, and becomes the plural long threadlike foamed material B which corresponds to the said plural small holes. It will become the uniformity with no aperture mutually.
<5> This unified foamed material B is supplied into the shaped part 832 that constitutes the second block 83, and is formed to the plate shape with rectangular section when it is conveyed to the conveyer 90 side, and then is pushed outside.
<6> Being pushed outside, the foamed material B which is in continued plate shape is conveyed by the conveyer 90, and is cut as needed and finally becomes the foamed material 100A.

### (Effect of the first embodiment)

According to the first embodiment, following effects are obtained.
(1) Compared with the prior resin foamed material, the foamed material 100A, which constitutes the thermal insulator 360, can lower the thermal conductivity and improve the thermal insulation efficiency as a result of containing the cellulose as the raw material. In details, the cellulose can be strong by the hydrogen bonds of the fibers and also becomes the interlaced bundles with the spaces at the same time. During the mixing refining by using extrusion molding machine 11, due to the water added, when the water enters into the spaces to form the mixing refining substance and is extruded at the high temperatures and high pressures, the hydrogen bonds of cellulose fibers is cut off in the presence of the water and the fiber becomes disjointed, and the cells are formed duo to the expansion of the fibers at the same time. With foaming by the steam, the water, which is in the spaces between the fibers, evaporates and the cell space is formed. Due to the evaporation of the water, the hydrogen bond is formed again and the space with the air is formed. With the hydrogen bond, the surface of the cellulose is strongly hydrophobic and well compatible with the resin component 2. When the foaming is proceeded at high temperatures of approximately 160-200°C, the resin component 2 melts and covers the bundle of the fiber of the cellulose. When the hydrogen bond is cut off, the fiber becomes disjointed. When the hydrogen bond is formed again, the micro space (the cell) which contains the air is formed, and the resin component covers the cellulose fiber. When the molding substances are formed with the competition of these three reactions, the air can be shutted in the apertures of the fibers. Accordingly the thermal conductivity is lowered and the thermal insulation is improved.
   Altogether, the wall structure body of this embodiment can show the excellent thermal insulation effect because it is equipped with this kind of heat insulator 360.
(2) In the thermal insulator 360, because it is equipped with plural type things having different thickness, by adjusting to the natural features of every place such as cold region and the warm region, the thermal insulator with suitable thickness can be chosen to prevent the excessive cost.
(3) As for the foamed material 100A which constitutes the thermal insulator 360, because the starch and polyvinyl alcohol are contained in the foaming material 1, it can make the water 41 which is the foaming fluid being dispersed uniformly in the foaming material 1. And it is possible to prepare the foamed material 100A with the uniformal dispersion of the cells.
(4) Because the content of the resin component in the foamed material 100A is below 50wt%, it is not the component of the recycling object based on the container recycling law and can be treated as the general rubbish. Therefore, it can be simply treated with low cost and without any special measures for the recycling.
(5) Because the foamed material 100A, which constitutes the thermal insulator 360, contains polyolefin-based resin 2, the thermal insulator 360 does not generate any noxious gas even burnt, and is considered the environment friendly.
   In addition, because the polypropylene 2A is adopted as the polyolefin-based resin 2, and this polypropylene 2A is superior in processability and machine aptitude etc, the foamed material 100A can be produced simply.
(6) At the formation of the foamed material 100, when foaming the polypropylene 2A, in the polypropylene 2A which covers the cellulose, there is a possibility of the formation of the micro crack due to the sudden pressure change when foaming. As for the part of the micro crack, because the polypropylene 2A is cut off, the oxidation and reduction by oxygen radical are ready to occur and the polypropylene 2A could easily collapse. Such that, when the no antioxidant is added, there is a possibility that the foamed material entirely collapses due to the spread of this micro crack with time lapse. As for this problem, in this invention, spread of the micro crack can be inhibited by the antioxidant added in the foaming material 1.
(7) In addition, the melting point of the antioxidant is lower than that of the polyolefin-based resin 2. When forming the foaming material 1, because the foaming material 1 is heated above the melting point of the polyolefin-based resin 2, the antioxidant melts and it can be dispersed uniformly in the foaming material 1. Accordingly, the foamed material 100A can be obtained in which the antioxidant is dispersed uniformly, and it is possible uniformly to prevent the growth of the micro crack over whole foamed material 100A.
   Furthermore, because the content of the antioxidant is designated as 0.7wt% of the foaming material, the effect of preventing oxidation can be sufficient, and at the same time, it is possible to prevent the increase of production cost of the thermal insulator 360.
(8) Because the unused waste paper is used as the cellulose in generally, the production cost of the foamed material 100A and the thermal insulator 360 can be reduced.
(9) In addition, the micro cells can be formed in the foamed material 100A by using the papers as the cellulose.
   Accordingly, it is possible to further improve the thermal insulation efficiency of the thermal insulator 360.
10) Furthermore, because the grain size of the cellulose are in the range of passing 60 meshes and at the same timenot passing400 meshes, the micro cell can be formed, and at the same time the operating efficiency for the raw materials supply can be guaranteed.
11) Because the cellulose and the starch constitute the paper grain 2B, in comparison with the case of separated processing respectively, it is possible to smoothly supply it into the cylinder 50 which constitutes the extrusion molding machine 11, and operating efficiency is improved.
(12) Because the water 41 is used as the foaming fluid, it is possible to lower the production cost of the foamed material 100A.
(13) Because the expansion ratio of the foamed material 100A is 20-100 times, it is possible to produce the foamed material 100A having higher thermal insulation efficiency.
(14) As for the pliability as the thermal insulator which is formed by the foamed material 100A, the compression strength of polystyrene foam is generally 2kgf/cm² (equivalent to 0.196MPa), and on the other hand, the compression strength of the foamed material 100A in this embodiment is 0.2 kgf/cm² (equivalent to 0.0196 MPa). As a result, as for the polystyrene foam, in the case of inserting it to the space of between the framework bodies, the interspaces could be easily formed and some difficulties would occur. But as for the foamed material 100A, it can be inserted even in the extent of +20mm, and there is no loss in the thermal insulation.

### (Deformation of the first embodiment)

Furthermore, this invention is not limited to the first embodiment mentioned-above, the deformation and the modification in the scope of realizing the object of this invention can be still included in this invention.

For example, in the said embodiment, the expansion ratio of the foamed material 100A, which forms the thermal insulator 360, was designated as 20 times to 100 times, but it is not limited to this range. For example, the expansion ratio can be below 20 times and can also exceed 100 times.

Furthermore, in the said embodiment, the water 41 was used as the foaming fluid, but it is not limited to this, and it is possible to use the oil and so on. In addition, in the said embodiment, the addition quantity of the antioxidant was designated as 0.7wt%, but it is not limited to this, for example, to be 1.5wt%. Furthermore, it is possible to exceed 1.5 wt%. The effect of preventing oxidation can be improved by increasing the addition quantity of the antioxidant.

In addition, in the said embodiment, the paper was used as the raw materials of the cellulose, but it is not limited to this, for example, it is possible to use the cotton and the flax etc.

Furthermore, the cornstarch was used as the starch, but it is possible to use the sweet potato starch, the potato starch, the tapioca starch, the rice starch and the wheat flour starch etc.

In the said embodiment, the antioxidant, anti-moldy reagent and the pigment are added as the additives, but the additives can include the talc etc. The foamed material, in which the fine cells are formed, can be produced by adding the talc, and the production efficiency can be improved when producing the foamed material.

Furthermore, in the said embodiment, the foamed material 100A contains both of the starch and polyvinyl alcohol, but it is not limited to this, it is possible to contain only either one of these. In this way, it is possible to reduce the types of raw materials of the foamed material 100A.

### (The examples regarding to the first embodiment)

The examples concerning the effect of the antioxidant in the thermal insulating material of the said first embodiment are explained as follows.

### (1) heat retardance test at 120°C

### Example 1-1

The foaming material as the raw materials of the thermal insulating material contains 30wt% cellulose, 25wt% starch and polyvinyl alcohol, 0.2wt% anti-moldy agent, 0.2wt% pigment, 1.0wt% antioxidant, and the polyolefin based resin being the remaining.

Herein, "Sumilizer GA-80", which is made by Sumitomo Chemical Co., Ltd (Inc.), was adopted as the antioxidant.

### Example 1-2

The conditions were same as the example 1-2, excepet that the content of the antioxidant in example 1-2 was 0.5wt %..

### Example 1-3

It was same as the example 1-2, except for using "Sumilizer GA-80" which is made by Sumitomo Chemical Co., Ltd (Inc.) as the antioxidant.

### Example 1-4

The conditions were same as the example 1-1, except that no antioxidant was added.
With using the foaming material as mentioned-above, the foamed material was produced by the same method as the said embodiment, and this foamed material was used as the thermal insulating material.

And, the heat-retardance test of this kind of the thermal insulating material was carried out at 120°C, and the thermal insulating material were observed at defined time points (24 hours, 500 hours, 1000 hours, 1500 hours, 2000 hours, 3000 hours).

Furthermore, because the destruction was confirmed for the example 1-4 at the time point of 24 hours, the further observation was not done. In addition, for the example 1-3, the observation at the time point of 3000 hour was not done.
The results are shown in Table 1 below.

**Table 1**

| Time piont (h) | 24 | 500 | 1000 | 1500 | 2000 | 3000 |
|---|---|---|---|---|---|---|
| Example 1-1 | O | O | O | O | O | O |
| Example 1-2 | O | O | O | O | Δ | × |
| Example 1-3 | O | O | O | O | O | - |
| Example 1-4 | × | - | - | - | - | - |

Herein, in the figure 1, "O" means no deterioration and destruction occurring, "Δ" means that the deterioration occurring on the surface, and "+ "means that the destruction has occurred.

The durability time was prolonged by adding the antioxidant, and it was verified that deterioration did not occur at least within 1500 hours. In addition, in the example 1-3, although the fading happened at the time point of 2000 hours, the deterioration did not occur, and it was verified that the heat resistance is high.

### (2) The estimate of the relationship of the decreasing ratio of the thermal conductivity with the number of passed years

### < Example 2-1>

With the same method as the said embodiment, the foamed material was produced from the foaming material, which contains 50wt% or more of the cellulose, starch and polyvinyl alcohol, and the polyolefin-based resin and the antioxidant. This foamed material produced was designated as the thermal insulating material.

### < Example 2-2>

With the same method as the said embodiment, the foamed material was produced from the foaming material, which contains 50wt% or more of the cellulose, starch and polyvinyl alcohol, and the polyolefin-based resin. This foamed material produced was designated as the thermal insulating material.
Namely, the example 2-2 is same as the example 2-1, except that the foaming material did not contain the antioxidant.

### <Comparative example 1-1>

As the thermal insulating material, the glass wool was used.

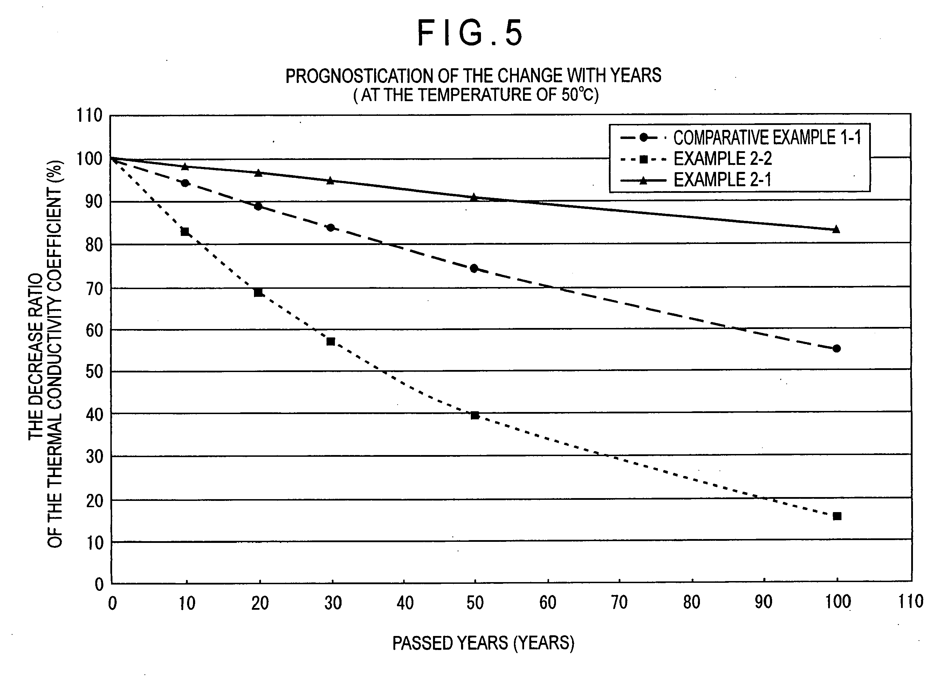

The decreasing ratio of the thermal conductivity coefficient of this thermal insulating material was estimated at the temperature of 50°C. The estimated result is shown in figure 5.

As for the thermal insulating material in the example 2-1, which contained the antioxidant, the decreasing ratio of the thermal conductivity coefficient was difficult to be decreased even with several years passing, and it is confirmed that the decreasing ratio of the thermal conductivity coefficient was high so far.
In comparison with the thermal insulating material in the example 2-2, which did not contain the antioxidant, because the decreasing ratio of the thermal conductivity coefficient in the example 2-1 was difficult to be decreased, it can be said that the thermal insulating material in the example 2-1 has high thermal insulation effect.

In addition, it is also confirmed that in the thermal insulating material in the example 2-1, which contained the antioxidant, the decreasing ratio of the thermal conductivity coefficient was difficult to be decreased, compared with the thermal insulating material, which is constituted the glass wool in the comparative example 1-1.

### [ The second embodiment ]

Hereinafter, the second embodiment of this invention is explained based on the drawings.

As for the wall structure of the buildings according to the second embodiment in this invention, the constitution of the thermal insulating material is different from the wall structure of the buildings according to the said first embodiment. Namely, as for the foamed material 100B, which constitutes the thermal insulating material according to the second embodiment, the portion of the combination is different from the foamed material 100A, which constitutes the thermal insulating material of the said first embodiment. Such that, the same marks are used in the constituting components when they are same as or equivalent to those of the first embodiment, and the explanation will be omitted or simplifies.
As shown in figure 4, the foaming material 1 contains the base agent 2 that is the main component and additive 3. In the base agent 2, it contains 35 weight parts of the powdered polypropylene (PP) 2 A which is the resin component, 30 weight parts of the cornstarch, and 35 weight parts of the papers, which consist of the cellulose that includes the stamp etc being unused and treated as waster, and the ratio of the cellulose is largest at weight ratio. As for polypropylene 2A, the melting point is 160°C. Furthermore, as for the polypropylene 2A, besides the powder, and other shapes such as the pellet shape can be used.

The said cornstarch and paper after being mixed are formed to paper grain2B as the granular blend, which was processed to pellet shape.
The papers, which constitute the paper grain 2B, are pulverized by various crushers such as the ball mills, and screened and classified manually or automatically by using the screen of J I S standard. The grain size is in the range of passing 30 meshes and at the same time not passing 400 meshes.

The additive 3 contains the antioxidant, phosphorus-nitrogen compound based fire-retardant and fatty acid amide lubricant. These three components, which constitute the additive 3, are added in the ratio below relative to 100 weight parts of the polypropylene 2A.
Antioxidant: 0.2 weight parts
Phosphorus-nitrogen compound based fire-retardant: 5 weight parts
Fatty acid amide lubricant: 0.5 weight parts

In addition, as for the said antioxidant, it is the mixture of the phenol antioxidant and the phosphate antioxidant. For these two components, the weight ratio of phenol antioxidant to phosphate antioxidant is 1/2.

According to this embodiment, the following effects are obtained.

Regarding this embodiment, the same effects as the first embodiment can be obtained.
(15) Because the foamed material 100A is adopted as the constitution material, the sufficient thermal insulation efficiency can be guaranteed by the cells inside the foamed material 100A, and the function can be shown sufficiently as the thermal insulator 360.
   In this case, because the cellulose is included as the raw materials of the foamed material 100A, it is possible to lower the thermal conductivity and to improve the thermal insulation efficiency in comparison with the prior resin foamed material.
(16) Because the thermal insulator 360 contains the cellulose, it possesses the function of modulating the humidity. When the humidity is high, it can absorb the moisture, and when the humidity is low, it discharges the moisture. Such that, it is possible to modulate the humidity between the indoor and the inside of the panel 300. Therefore, it can prevent the dew condensation on the inside of the wall panel 300 and the indoor surface of the plaster cross 340, and to improve the durability of the wall structure of the buildings 200 which includes wall panel 300.
(17) In addition, the resident of the indoor can feel cool in summer with the humidity-regulating function mentioned-above and the radiation effect, and the habitability indoors can be improved. Furthermore, because the humidity of the indoor can be maintained in this way, it becomes difficult to be the static electricity for the surface of the plaster crosses 340 which is exposed to the indoor side, and the adhesion of the dust on the surface can be prevented.
(18) Because the plaster cross 340 was adopted, the moisture permeance between the inside of the wall panel 300 and the indoor can be realized. Therefore, it is able to maintain the humidity of the indoor and the inside of the wall panel 300, and the dew condensation inside wall panel 300, where it is difficult to be discovered, can be prevented securely.
(19) Because the moisture permeable and waterproof seat 320 was adopted, the moisture from the indoor is not remained in the thermal insulator 360, and it can be discharged outside. Therefore, the dew condensation occurred inside wall panel 300 could be prevented. In addition, it is able to prevent the penetration of the rainwater from the outside to protect the wall panel 300.
(20) For every 100 weight parts of polypropylene 2A, 0.2 weight parts of the antioxidant is added, and further more, the antioxidants are the mixture of the phenol-based antioxidant and the phosphite-based antioxidant in the weight ratio of 1/2. Therefore, the sufficient durability of the foamed material 100 A can be guaranteed.
(21) For every 100 weight parts of polypropylene 2A, 5 weight parts of the phosphorus-nitrogen compound based fire-retardant was added. Therefore, the sufficient fire-retardance for the foamed material 100A can be guaranteed.
(22) For every 100 weight parts of polypropylene 2A, 0.5 weight parts of the fatty acid amide lubricant is added. Therefore, it possesses the fine cells, and furthermore, the foamed material 100A, which was foamed sufficiently, can be produced. In addition, by adding the fatty acid amide based lubricant, the foamed material 100A itself can absorb the moisture in the air and possess the function of regulating the humidity, and it is able to prevent the electrification of the foamed material 100A and the adsorption of the dust.

### [ The third embodiment ]

Hereinafter, the third embodiment of this invention is explained based on the drawings.

As for the wall structure of the buildings according to the third embodiment of this invention, the constitution of the thermal insulator is different from the wall structure of the buildings according to the said first embodiment. Namely, as for the foamed material 100C, which constitutes the thermal insulator according to third embodiment, the proportion of the combination is different from the foamed material 100A, which constitutes the thermal insulator of the said first embodiment. Therefore, the same marks are used in the constituting components when they are same as or equivalent to the first embodiment, and the explanation will be omitted or simplified.

The foamed material 100C can be produced by foaming the foaming material 1X with water 41 by using the extrusion-molding machine 11. The foaming material IX contains the said base agent 2, which is the main component, and the additive 3A, whose content is different from the said additive 3.

The additive 3A contains the antioxidant with the same content as the said first embodiment, the fire-retardant that consists of chlorinated paraffin , and the talc. These three components, which form additive 3A, are added with the content below for every 100 weight parts of polypropylene 2A.
Antioxidant: 0.2 weight parts
The fire-retardant, which consists of the chlorinated paraffin: 5 weight parts
Talc: 2 weight parts

According to this embodiment, there are some effects as shown below, besides the same effects (1) - (19) as the said second embodiment.
(23) For every 100 weight parts of polypropylene 2A, 5 weight parts of the fire-retardant, which consists of chlorinated paraffin, was added. Therefore, the sufficient fire-retardance for the foamed material 100C can be guaranteed..
(24) For every 100 weight parts of polypropylene 2A, 2 weight parts of the talc was added. Therefore, it possesses the fine cells, and further more, the foamed material 100C can be sufficiently foamed.

### [ Deformation of the second and the third embodiment ]

Furthermore, this invention is not limited to the second and the third embodiment mentioned-above, the deformation and the modification in the scope of achieving the object of this invention can be included in this invention

For example, polypropylene 2A was adopted as the resin component, but it is not limited to this, and it is possible to be other resin components such as polyethylene, polyethylene terephthalate and biodegradable plastics.

The wall structure of this invention is formed as the wall panel 300 of the buildings by the panel construction method, but it is not limited to this. For example, it is also possible to adopt the wall structures which are formed by other construction methods such as the common construction method and unit construction method.

The plaster cross was adopted as the moisture permeable surface material, but it is not limited to this, and it is also possible to adopt the surface materials like other paper crosses which possesses the moisture permeability.

In addition, as for the particular structure, form, size, combination and use etc at the time for executing this invention, it is possible to use other structures in the scope of achieving the object of this invention.

### [ The examples regarding the wall panel of the second and the third embodiment]

Hereinafter, with regard to the building and the wall panel, which are equipped with the wall panel related to the second and the third embodiment mentioned-above, the explanations are made with the examples and the comparative examples.

### (Example 3) The heat preservation test of the buildings and wall structures

### <Example3-1 >

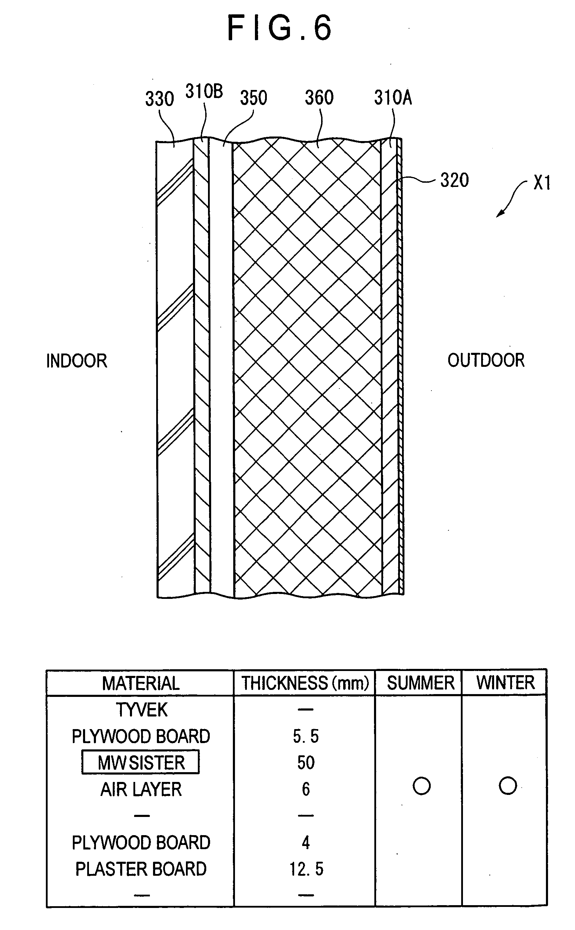

As the wall panel, as shown in figure 6, the wall panel X1, which is formed in the following order from (1) to (6) from indoor side, was adopted. Furthermore, the plaster cross 340 was not setup, considering that there are no influences on the result.
(1) Gypsum board 330: 12.5mm
(2) Plywood 310 B of the indoor side: 4.0mm
(3) Air layer 350: 6.0mm
(4) Thermal insulator 360 (MWsister): 50.0mm
(5) Plywood of the outdoor side 310A: 5.5mm
(6) The moisture permeable and waterproof seat 320 (Tyvek; made by Dupont corporation)

In addition, the constitutions other than the wall panel X1, which forms the buildings, are shown below.

Roof: It has the same constitution as the wall panel X1, and the thickness of the MWsister panel is 100mm.

Floor: It has the same constitution as the wall panel X1.
Window: Alumi pair glass sash
Air tightness: 5 cm²/m²

### < Comparative example 3-1 >

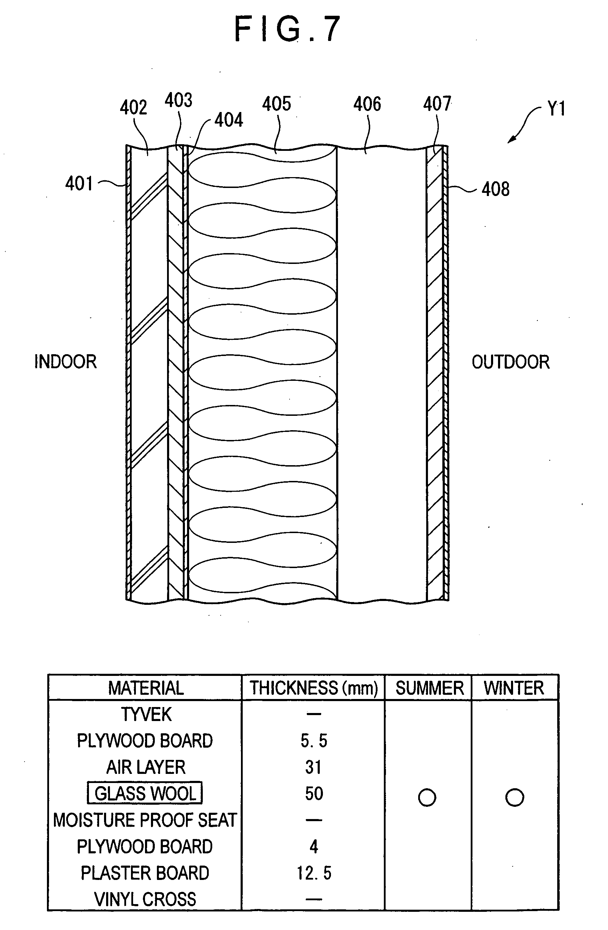

As the wall panel, as shown in figure 7, the wall panel Y1, which is formed in the following order from (1) to (8) from indoor side, was adopted.
(1) vinyl cross 401
(2) gypsum board 402: 12.5mm
(3) plywood of the indoor side 403: 4.0mm
(4) moistureproof seat 404
(5) thermal insulator (glass wool) 405: 50.0mm
(6) Air layer 406: 31.0mm
(7) Plywood of the outdoor side 407: 5. 5mm
(8) The moisture permeable and waterproof seat (Tyvek; Dupont corporation make) 408

In addition, the constitutions other than wall panel Y1, which forms the buildings, are shown as below.

Roof: It has the same constitution as the wall panel Y1, and is the panel which includes the 55 mm thick rock wool being used in place of the glass wool 405

Floor: It has the same constitution as the wall panel Y1.
Window: Alumi pair glass sash
Air tightness: 5 cm²/m²

Concerning the buildings of the example 3-1 and the comparative example 3-1, the respective heat loss factor (Q value; W/(m².K)) was measured. In addition, concerning the wall panel X1 and Y1, which forms each building, coefficient of heat transmission (K value; W/(m².K)) is measured. These results are shown in Table 1.

Furthermore, Q value is the index which shows the heat preservation efficiency of the house. When this value is smaller, the heat is difficult to escape from the building, and the residence efficiency is higher. In addition, K value is the index for showing the heat transmission, and similarly, when this value is small, the heat preservation efficiency is high.

**Table 2**

| | Q value | K Value |
|---|---|---|
| Example 3-1 | 2.32 | 0.62 |
| Comparative example 3-1 | 2.67 | 0.78 |

As shown in Table 2, in the buildings of the example 3-1, Q value is lowered by 13%, in comparison with the buildings of the example 3-1. Therefore, it can be understood that the heat preservation efficiency has improved. In addition, compared with the wall panel Y1 of the comparative example 3-1, the K value in the wall panel X1 of the example 3-1 is is lowered by 21%, and it can be understood that the heat preservation efficiency has been improved.

### Example 3-2

In the example 3-2, there are some alterations as shown below from the example 3-1, but other constitutions are the same. Namely, in the wall panel X2 (see figure 2), the plaster cross 340 was setup in the indoor side of the gypsum board 330, and in addition, the thickness of the heat insulator 360 (MWsister) was designated as 75.0 mm.

### Comparative example 3-2

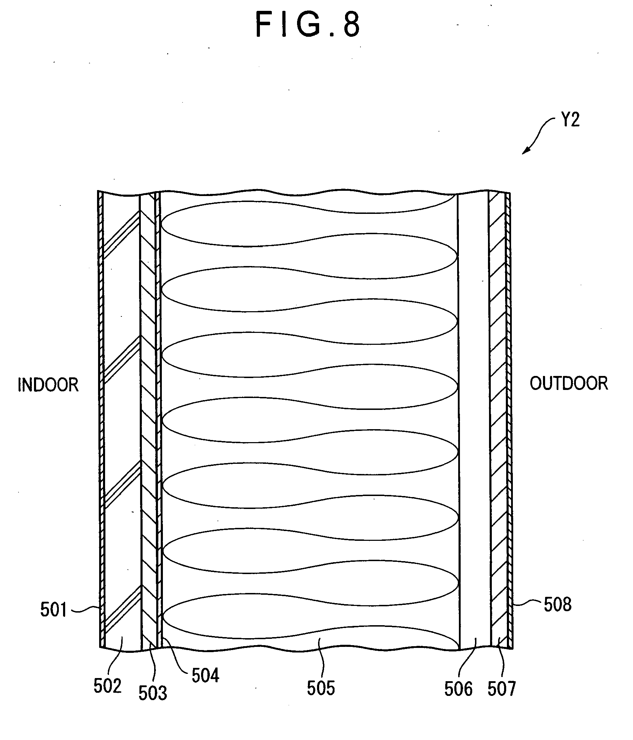

As the wall panel, as shown in figure 8, the wall panel Y2, which is formed from the indoor side in the order of (1)-(8) of below, was adopted. Other constitutions are same as example 3-1.
(1) Vinyl cross 501
(2) Gypsum board 502: 12.5 mm
(3) The moistureproof seats 503
(4) Plywood 504 of the indoor side: 4.0 mm
(5) The thermal insulator (glass wool) 505: 100.0 mm
(6) The air layer 506
(7) The plywood 507 of the outdoor side: 5.5mm
(8) The moisture permeable and waterproof seat (Tyvek; made by Dupont corporation) 508

Concerning the buildings of the example 3-2 and comparative example 3-2, the respective heat loss coefficient (Q value; W/ (m²·K)) was measured. In addition, concerning the wall panel X2 and Y2, which constitute each building, the coefficient of heat transmission (K value; W/(m²·K)) was measured. These results are shown in Table 3.

**Table 3**

| | Q value | K Value |
|---|---|---|
| Example 3-2 | 1.55 | 0.48 |
| Reference example 3-2 | 1.50 | 0.41 |

As shown in Table 3, in the buildings of the example 3-2 and comparative example 3-2, it is understood that the Q values are probably same. In addition, when comparing wall panel X2 with Y2, it is understood that the K values are probably same. However, as for the wall panel X2 of the example 3-2, the thickness of the thermal insulator is about 13% thicker compared to that of the wall panel Y2 of the relative example 3-2, and accordingly the thermal insulation has been improved as a whole.

### [The examples according to the thermal insulator of the second and the third embodiments]

Hereinafter, the thermal insulator, which is used for the wall panel in the second and the third embodiments mentioned-above, is explained.

### (Example 4) The thermal insulation test

### < Example 4-1>

In the raw materials, the foaming material, which includes the papers contained the cellulose and the polypropylene, and the water as the fluid for foaming, is used. Based on these raw materials, the foamed material (the paper + resin compound foamed material) is obtained in the same condition and the procedure as the said first embodiment by using the said extrusion-molding machine 11.

### <Comparative example 4-1>

Paper pulverized substances were obtained by pulverizing the papers, which includes the cellulose that is the raw materials.

### <Comparative example 4-2>

The foaming material, which consists of the polypropylene, and the water that is used as the fluid for foaming, are used as the raw materials. Based on these raw materials, the foamed material (the paper + resin compound foamed material) is obtained in the same condition and the procedure as the said first embodiment by using the said extrusion-molding machine 11.

Concerning the raw materials and the foamed material, which are obtained in these example 4-1 and comparative example 4-2 and 4-2, the respective coefficient of thermal conductivity (W/ (m·K)) was measured and shown in Table 4.

Furthermore, in Table 4, the data 0.058W/ (m·K) is converted from 0.050kcal/ (m·h·°C). In addition, the data 0.052W/ (m·K) is converted from 0.0451 kcal/(m·h·°C), and 0.035W/(m·K) is converted from 0.030 kcal/ (m·h·°C).

**Table 4**

| | Foaming material | Coefficient of thermal conductivity [W/(m·k)] |
|---|---|---|
| Example 4-1 | paper + resin compounded foamed material | 0.035 |
| Comparative example 4-2 | pulverized paper | 0.058 |
| Comparative example 4-2 | resin foamed material | 0.052 |

As shown in Table 4, the coefficient of thermal conductivity of the foamed body, which is composed of the paper and the polypropylene obtained in the example 4-1, is smaller, in comparison with the pulverized paper in the comparative example 4-1 or the foamed body which is composed of only polypropylene in the comparative example 4-2. And it is found that the thermal insulation efficiency is improved. When the paper that includes the cellulose is added, the coefficient of thermal conductivity decreases. In other words, it is understood that the thermal insulation efficiency can be improved.

### (5) The influence of the grain size of the paper

### <Example 5-1 >

In the foaming material of the raw materials, 35 weight parts of polypropylene 2A, 30 weight parts of cornstarch and 35 weight parts of the papers were used. As for the cornstarch and the paper, the said paper grain 2B in mixed and pelletized shape is used. The paper, which is used as these raw materials, was pulverized with the ball mill, and the grain sizes of the paper are designated in the range of passing 30 meshes and at the same time not passing 100 meshes. In addition, the water was used as the fluid for foaming of raw materials. Based on these raw materials, the foamed material is obtained in the same condition and the procedure as the said first embodiment by using the said extrusion-molding machine 11.

### <Example 5-2 >

As for this example, only grain sizes of the papers which are the raw materials are different from the said example 5-1, while others like the combination of the raw materials, the production procedure and the conditions etc are identical. The grain sizes of the papers are designated in the range of passing 100 meshes at the same time not passing 400 meshes. As for this range, for example, it can be adopted that the grain sizes of the papers is in the range of passing 170 meshes (corresponding to the opened pore 88 µm) and at the same time not passing 325 meshes (corresponding to the opened pore 44 µm).

### < Comparative example 5-1 >

As for this comparative example, only grain sizes of the papers which are the raw materials are different from the said example 5-1, while others like the combination of the raw materials, the production procedure and the conditions etc are identical. The grain sizes of the papers are designated for passing 400 meshes.

### <Comparative example 5-2>

As for this comparative example, only grain sizes of the papers which are the raw materials are different from the said example 5-1, while others like the combination of the raw materials, the production procedure and the conditions etc are identical. The grain sizes of the papers are designated in the range of passing the opened pore of 5mm (3.5-4 meshes) and at the same time not passing 30 meshes.

### < Comparative example 5-3>

As for this comparative example, only grain sizes of the papers which are the raw materials are different from the said example 5-1, while others like the combination of the raw materials, the production procedure and the conditions etc are identical. The papers are such cut that they do not pass the opened pore of 5mm.

Concerning the foamed material obtained in these examples 5-1, 5-2 and comparative example 5-1 to 5-3, the respective operating efficiency at the time of the production, the production cost, and the foaming characteristics of the foamed material obtained were comparatively evaluated. These results are shown in Table 5. Furthermore, the standard of determining evaluation is as follows.
- ⓪:: It is considerably satisfactory.
- ○:: It is satisfactory.
- X:: It is bad

**Table 5**

| | Grain size [ meshes ] | Operating efficiency | Production cost | Foaming characteristics |
|---|---|---|---|---|
| Example 5-1 | Passing 30 and not passing 100 | O | O | O |
| Example 5-2 | Passing 100 and not passing 400 | O | O | O |
| Comparative example 5-1 | Passing 400 | X | X | O |
| Comparative example 5-2 | Passing 3.5-4 and not passing 30 | ⓪ | O | X |
| Comparative example 5-3 | Fine cut | ⓪ | O | X |

As shown in Table 5, as for the foamed material which is obtained in the example 5-1 and 5-2, it is found that the operating efficiency, the cost and the foaming characteristics in each case is satisfactory. On the other hand, the foaming characteristics in comparative example 5-1 is satisfactory, but the operating efficiency and the cost are bad due to the complexity of pulverizing process and the bridge occurrence when supplying the raw materials. In addition, although there is no bridge occurrence and the operating efficiency is superior in the comparative examples 5-2 and 5-3, the sufficient foaming cannot be obtained and it is inferior in the foaming characteristics.
It could be seen from the above that each performance is perfect when the grain sizes of the paper are in the range of passing 30 meshes and not passing 400 meshes.

### (6) The test of antioxidant addition

### <Example 6-1>

In the foaming material of the raw materials, the base agent 2, which contains 35 weight parts of polypropylene 2A, 30 weight parts of cornstarch and 35 weight parts of the papers, and the additive 3 were used. As for the cornstarch and the paper, the said paper grain 2B was used. In the additive 3, the antioxidants, which are the mixtures as below, were adopted. The foamed material was obtained based on these raw materials in the same process as the said first embodiment.
Constitution of additive 3: Phenol based antioxidant (Commercial name "Adecastab AO-80", made by Asahi electrification industry) / Phosphite based antioxidant (Commercial name " Adecastab 2112", made by Asahi electrification industry) = 1/2 (weight ratio)
Addition amount: 0.2 weight parts were added to each 100 weight parts of polypropylene 2A.

### <Comparative example 6-1 >

Without adding additive 3, only the base agent 2, which is same as the said example 6-1, was used as the raw material, and the foamed material was obtained in the same process as the said first embodiment.

### < Comparative example 6-2>

In the foaming material of the raw materials, as same in the said example 6-1, the base agent 2 and the following antioxidants, which are used as the additive 3, are used. The foamed material was obtained based on these raw materials in the same process as the said first embodiment.
The type and the addition amount of the additive 3: 0.2 weight parts of the phenol antioxidant was added (Commercial name "Adecastab 2112", made by Asahi electrification industry) to each 100 weight parts of polypropylene 2A.

### < Comparative example 6-3>

In the foaming material of the raw materials, as same in the said example 6-1, the base agent 2 and the following antioxidants, which are used as the additive 3, are used. The foamed material was obtained based on these raw materials in the same process as the said first embodiment.

The type and the addition amount of the additive 3: 0.2 weight parts of the phosphite based antioxidant (Commercial name " Adecastab 2112", made by Asahi electrification industry) were added to each 100 weight parts of polypropylene 2A.

Concerning the foamed material obtained in the example 6-1 and the comparative examples 6-1 to 6-3, the test of heat-accelerated deterioration under 120°C was carried out by measuring and comparing the time when the needle entrance resistance of the foamed material becomes zero. The results are shown in Table 6.

**Table 6**

| | Added antioxidant | time of needle entrance resistant (hours) |
|---|---|---|
| Example 6-1 | Mixture of phenol-based and phosphite-based antioxidants | Above 5000 |
| Comparative example 6-1 | No addition | 480 |
| Comparative example 6-2 | phenol-based antioxidant | 600 |
| Comparative example 6-3 | phosphite-based antioxidant | 560 |

As shown in Table 6, it is found that heat deterioration is easy to occur for the foamed material in the comparative example 6-1, in which the antioxidant was not added, from the fact that the time of its needle entrance resistant is shorter than the foamed material in the example 6-1 and comparative example 6-2 and 6-3, in which the antioxidant was added

In addition, even in the cases of adding the antioxidant, especially like the case of adding the antioxidants mixed in the ratio as shown in the example 6-1, its needle entrance resistant time has reached 10 times, in comparison with the cases of the comparative example 6-2 and 6-3 in which the antioxidant was added solely, and it is clearly that the heat deterioration is difficult to occur in the case of example 6-1.

Furthermore, in all cases, when 0.2 or more weight parts of the antioxidant are added, it is possible to get the effect which makes the zero time of the needle entrance resistant longer.

It could be seen from the above that, when adding more than 0.2 weight parts of the antioxidant, which is the mixture of the phenol antioxidant and the phosphite antioxidant in theweight ratio of 1/2, the durability for heat can be extremely improved.

### (7) Test of fire-retardant addition

### <Example 7-1 >

In the foaming material of the raw materials, the base agent 2, which contains 35 weight parts of polypropylene 2A, 30 weight parts of cornstarch, and 35 weight parts of the paper, and the additive 3 were used.

In the cornstarch and the paper, the said paper 2B was adopted. In the additive 3, the following fir-retardant was adopted. The foamed material was obtained in the same process as the said first embodiment.

The type and the addition amount of the additive 3: 5 weight parts of the bromine-based fire-retardant (Commercial name "Saytex BT-93", component "Ethylene bis-tetrabromophthalimide", made by Albemaal corporation) were added to each 100 weight parts of polypropylene 2 A.

### <Example 7-2>

In the foaming material of the raw materials, as same in the said example 7-1, the base agent 2 and the following fire-retardants, which are used as the additive 3, are used. The foamed material was obtained in the same process as the said first embodiment.

The type and the addition amount of the additive 3: 5 weight parts of the phosphorus-based fire-retardant (Commercial name "poly-safe NH-12", phosphorus-nitrogen compounded system, made by the Ajinomoto fine techno corporation,) were added to each 100 weight parts of polypropylene 2 A.

### <Example 7-3>

In the foaming material of the raw materials, as same in the said example 7-1, the base agent 2 and the following fire-retardants, which are used as the additive 3, are used. The foamed material was obtained in the same process as the said first embodiment.

The type and the addition amount of the additive 3: 5 weight parts of the chlorinated paraffin (Commercial name "poly-safe FCP-6", made by the Ajinomoto fine techno corporation,) were added to each 100 weight parts of polypropylene 2 A.

### <Example 7-4>

In the foaming material of the raw materials, as same in the said example 7-1, the base agent 2 and the following fire-retardants, which are used as the additive 3, are used. The foamed material was obtained in the same process as the said first embodiment.

The type and the addition amount of the additive 3: 5 weight parts of the antimony trioxide (Commercial name "STOX-60", made by the Nihon Mining & Concentrating Co., Ltd. corporation) were added to each 100 weight parts of polypropylene 2 A.

### <Comparative example 7-1>

In the foaming material of the raw materials, as same in the said example 7-1, only the base agent 2 was used, and the following fire-retardants used as the additive 3, was not added. The foaming body was obtained in the same process as the said first embodiment.

The fire-vanishing time(seconds) of the foamed material, which were obtained in the examples 7-1 to 7-4 and the comparative example 7-1, were measured and compared. The result is shown in Table 7.

**Table 7**

| | Added fire-retardant | fire-vanishing time (time) |
|---|---|---|
| Example 7-1 | bromime-based | 36 |
| Example 7-2 | phosphorus-based | 30 |
| Example 7-3 | chlorinated paraffin | 33 |
| Example 7-4 | antimony trioxide | 38 |
| Comparative example 7-1 | No addition | 40 |

As shown in Table 7, it is found that the fire-resistance of the foamed material of the Example 7-1~7-4, in which the either fire-retardant was added , is high, from the fact that their fire-vanishing time was shorter than the foamed material of the comparative example 7-1, in which the fire-retardant was not added.

### (8)Test 1 of lubricant addition

### <Example 8-1>

In the foaming material of the raw materials, the base agent 2, which contains 35 weight parts of polypropylene 2A, 30 weight parts of cornstarch, and 35 weight parts of the paper, and the additive 3 were used. In the cornstarch and the paper, the said paper 2B was adopted. In the additive 3, the following lubricant was adopted. The foamed material was obtained in the same process as the said first embodiment.

The type and the addition quantity of the additive 3: 0.2 weight parts of the fatty acid amide-based lubricant (Commercial name "fatty acid amide", made by the Kao Soap corporation) were added to each 100 weight parts of polypropylene 2A.

### <Example 8-2>

In the foaming material of the raw materials, as same in the said example 8-1, the base agent 2 and the lubricant, which is used as the additive 3, are used. The foamed material was obtained in the same process as the said first embodiment. Furthermore, the addition amount of lubricant was changed.

The type and the addition amount of the additive 3: 0.5 weight parts of the fatty acid amide-based lubricant (Commercial name "fatty acid amide", made by the Kao Soap corporation) were added to each 100 weight parts of polypropylene 2A.

### <Comparative example 8-1 >

In the foaming material of the raw materials, as same in the said example 8-1, the base agent 2 and the lubricant, which is used as the additive 3, are used. The foamed material was obtained in the same process as the said first embodiment. Furthermore, the addition amount of lubricant was changed.

The type and the addition amount of the additive 3: 1.0 weight part of the fatty acid amide-based lubricant (Commercial name "fatty acid amide", made by the Kao Soap corporation) were added to each 100 weight parts of polypropylene 2 A.

### < Comparative example 8-2>

In the foamed material of the raw materials, as same in the said example 8-1, only base agent 2 was used but the lubricant, which is used as the additive 3, was not added. The foamed material was obtained in the same process as the said first embodiment.

As for these foamed material obtained in the examples 8-1 and 8-2 and the comparative example 8-1 and 8-2, the foaming state, the coefficient of thermal conductivity (W/ (m·K)) and the density (kg/m³) were measured and compared. The results are shown in Table 8. Furthermore, in some cases the results could not be obtained

The foaming state in the foamed material is evaluated in the following criterion.
- ⓪:: It is considerable satisfactory.
- O:: It is satisfactory.
- X:: It is insufficient.

In addition, in Table 8, 0.040 W/ (m·K) was converted from 0.035kcal/ (m·h·°C), and 0.037 W/ (m·K) was converted from 0.032kcal/(m·h·°C).

**Table 8**

| | addition amount of fatty acid amide-based lubricant | foaming state | coefficient of thermal conductivity [W/ (m·K)] | Density [kg/m³] |
|---|---|---|---|---|
| Example 8-1 | 0.2 weight parts | O | 0.037 | 18 |
| Example 8-2 | 0.5 weight parts | O | 0.037 | 20 |
| Comparative example 8-1 | 0.1 weight parts | X | - | - |
| Comparative example 8-2 | No addition | ⓪ | 0.040 | 16 |

As shown in Table 8, for the foamed material of the comparative example 8-1, in which 1 weight part of the fatty acid amide lubricant was added, it is found that the foaming state was insufficient. In addition, for the foamed material of the comparative example 8-2, in which the lubricant was not added, it is found that the density was small and the dense cells were not formed. On the other hand, for the foamed material of the example 8-1 and 8-2, it is found that the foaming state was satisfactory. Furthermore, their thermal conductivity coefficient is small, the thermal insulation efficiency is high and the dense cells with sufficiently small density are formed.

### (9)Test 2 of lubricant addition

### <Example 9-1 >

In the foaming material of the raw materials, the base agent 2, which contains 35 weight parts of polypropylene 2A, 30 weight parts of cornstarch, and 35 weight parts of the paper, and the additive 3 were used. In the cornstarch and the paper, the said paper 2B was adopted. In the additive 3, the following lubricant was adopted. The foamed material was obtained in the same process as the said first embodiment.

The type and the addition amount of the additive 3: 1 weight part of the talc (the commercial product, powder) were added to each 100 weight parts of polypropylene 2 A.

### <Example 9-2>

In the foaming material of the raw materials, as same in the said example 9-1, the base agent 2 and the lubricant, which is used as the additive 3, are used. The foamed material was obtained in the same process as the said first embodiment. Furthermore, the addition amount of lubricant was changed.

The type and the addition amount of the additive 3: 2 weight parts of the talc (the commercial product, powder) were added to each 100 weight parts of polypropylene 2 A.

### <Comparative example 9-1 >

In the foaming material of the raw materials, as same in the said example 9-1, the base agent 2 and the lubricant, which is used as the additive 3, are used. The foamed material was obtained in the same process as the said first embodiment. Furthermore, the addition amount of lubricant was changed.

The type and the addition amount of the additive 3: 5 weight parts of the talc (the commercial product, powder) were added to each 100 weight parts of polypropylene 2 A.

### < Comparative example 9-2>

In the foaming material of the raw materials, as same in the said example 9-1, the base agent 2 and the lubricant, which is used as the additive 3, are used. The foamed material was obtained in the same process as the said first embodiment. Furthermore, the addition amount of lubricant was changed.

The type and the addition amount of the additive 3: 10 weight parts of the talc (the commercial product, powder) were added to each 100 weight parts of polypropylene 2 A.

As for these foamed materials obtained in the examples 9-1 and 9-2 and the comparative example 9-1 and 9-2, the foaming state, the coefficient of thermal conductivity (W/ (m K)) and the density (kg/m3) were measured and compared. The results are shown in Table 9. Furthermore, in some cases the results could not be obtained.

The foaming state in the foamed material is evaluated in the following criterion.
- O:: It is satisfactory.
- X:: It is insufficient.

In addition, in Table 9, 0.037 W/ (m.K) was converted from 0.032kcal/ (m·h·°C), and 0.035W/ (m·K) was converted from 0.030kcal/ m·h·°C).

**Table 9**

| | addition amount of talc | foaming state | coefficient of thermal conductivity [W/ (m·K)] | Density [kg/m³] |
|---|---|---|---|---|
| Example 9-1 | 1 weight part | O | 0.037 | 18 |
| Example 9-2 | 2 weight parts | O | 0.037 | 20 |
| Comparative example 9-1 | 5 weight parts | X | - | - |
| Comparative example 9-2 | 10 weight parts | X | - | - |

As shown in Table 9, for the foamed material of the comparative example 9-1 and 9-2, in which 5 weight parts of the talc were added, both the coefficient of thermal conductivity and the density were not measured because the foaming state was insufficient.
On the other hand, for the foamed material of the example 9-1 and 9-2, it is found that the foaming state was satisfactory. Furthermore, because the thermal conductivity coefficient is small, their thermal insulation efficiency is high and the dense cells with sufficiently small density are formed.

### [The fourth embodiment]

Hereinafter, the fourth embodiment of this invention is explained based on the drawings.

The fourth embodiment relates to the foamed material, which are used as the cushioning materials for packing the fruits and precise equipments etc, in the plate shape or sheet shape with the specified sizes.

As for this foamed material, the interspaces (cells) therein are formed by foaming the foaming materials that contain the thermoplastic resin with the water that is the fluid for foaming. In details, it is the same foamed material as the foamed material 100A that is used as the thermal insulating material in the wall structure of the buildings of the said first embodiment. Therefore, concerning the constituting components, the production equipments and the production methods, which are same or equivalent to the 1st example, the same marks are used and the explanations will be omitted or simplified.

According to this embodiment, as for the foamed material 100A, the respective effect can be obtained as expressed in the said each example, and at the same time, when it is used as the cushioning material, the effects below can also be obtained.

(25) Among the components which constitute the foaming material 1, when this foamed material 100A is disused, it means that the cellulose is disused because the content of the cellulose is largest in weight ratio in the foamed material. Such that, it is not the component of the recycling object based on the container recycling law and can be treated as the general rubbish. Therefore, it can be simply treated with low cost without any special measures for the recycling.

(26) By using the foamed material 100A as the cushioning material for protecting the equipments etc, the function of absorbing the concussion to the equipments, which are the protective objects, can be fully realized, and the function of preventing the heat from transferring to the equipments can also be fully realized. In this case, because the foamed material 100A is designated as plate shape, the rigidity in certain extent can be guaranteed besides the pliability. For example, it is suitable for using as the separating plate for individually separating the fruits and the vegetables etc.

### [The fifth embodiment]

Hereinafter, the fifth embodiment of this invention is explained based on the drawings.

This fifth embodiment is similar to the said fourth embodiment in the points of using the foamed material as the cushioning material for packing the fruits and the precise equipments etc, and of both using the foamed material 100A in the basic material, but the shape of the foamed material is different.

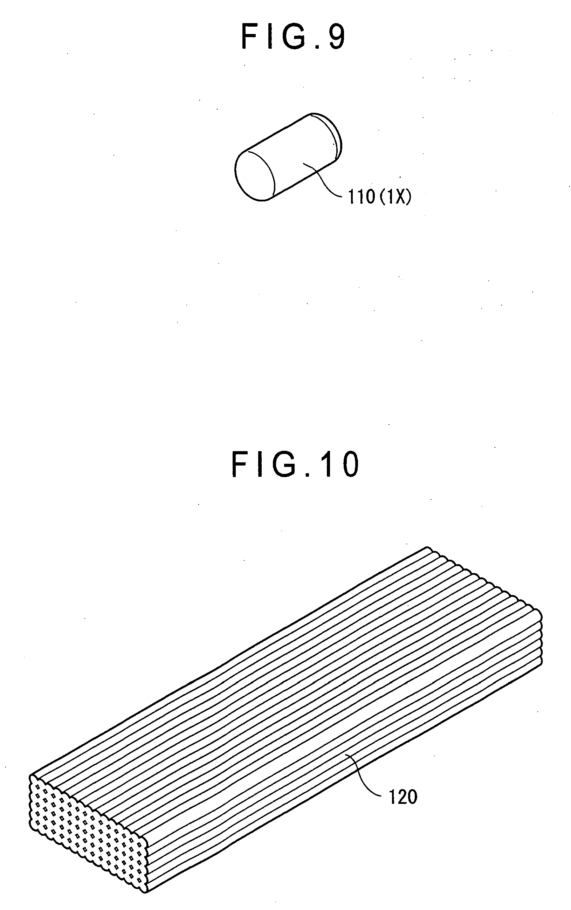

As shown in figure 9, the foamed material 110 according to this embodiment is the cylindrical shape (rose shape) foamed material with the cells being formed therein. This kind of foamed material 110 can be produced with the same procedures by using nearly same extrusion-molding machine 11 as the said first embodiment. In detail, it can be produced with the same procedures by removing die 80, installing the block where the section of the open part is designated as circle shape, and cutting it in suitable length. The explanation of production procedures is omitted.

Furthermore, according to this embodiment, there are following effects.
(27) Because of using the foamed material 110 in the cylindrical shape, even in the case of using it as the cushioning material for packing the precise equipments etc, the ordonnance can be made with no aperture mutually, and the precise equipments inside can be protected.

### [The deformation of the fourth and the fifth embodiments]

Furthermore, this invention is not limited to the fourth and the fifth embodiments mentioned-above, the deformation and the improvement in the scope of achieving the object of this invention can be included in this invention.

For example, the foamed material 100A was formed in plate shape in the fourth embodiment, and also, the foamed material 100A was formed in cylindrical shape in the fifth embodiment, but the shapes of the foamed materials are not limited by only these kinds of shapes, and other shapes can also be adopted.

For example, as shown in figure 10, it is possible to be as prism shaped or cylinder shaped foamed material 120.

In a word, in order to fit the situation, when using the foam body as the cushioning material or the thermal insulating material, the shapes and the sizes etc can be appropriately selected

In addition, the polypropylene 2A was used as the resin component, but it is not limited to this, it is possible to use other resin components such as polyethylene, polyethylene terephthalate and biodegradable plastics.

In the said embodiments, phosphorus - nitrogen compounded system, and other materials consist of the chlorinated paraffin were adopted as the fire-retardant, but it is not limited to this. For example, bromine-based system, antimony trioxide and the combination thereof can be used as the fire-retardant.

In addition, as for the detail structures, forms, sizes, combinations and uses etc , it is possible to adopt other preferred embodiments in the scope of achieving the object of this invention.

### Industrial Availability

The present invention can be used as foamed material, method for production thereof, cushioning material, thermal insulating material and wall structure of building.

## Claims

1. A foamed material prepared by foaming the foaming material that contains the resin components with the foaming fluid ,**characterized in that** the said foaming material contains the said resin components and non resin components comprising at least the cellulose, and the content of the said non resin components in the said foaming material is 50 weight % or more.

2. The foamed material according to claim 1, **characterized in that** the said non resin components contain the cellulose and at least one of the starch or polyvinyl alcohol, and among the said resin components, the cellulose and least one of the starch or the polyvinyl alcohol in the said foaming material, the weight ratio of the said cellulose is largest.

3. The foamed material according to claim 1 or claim 2, **characterized in that** the said cellulose is the cellulose-based grain prepared by pulverizing the roughly crushed plant cellular substance.

4. The foamed material according to any one of claim 1 to claim 3, **characterized in that** the said cellulose is the waste paper pulverized into powder or granule.

5. The foamed material according to any one of claim 2 to claim 4, **characterized in that** the said cellulose and said starch is composed of the granular mixture prepared by mixing granular materials.

6. The foamed material according to claim 5, **characterized in that** the grain size of the said cellulose, which constitutes the said granular mixture, is designated in the range of passing 30 meshes and at the same time not passing 400 meshes.

7. The foamed material according to any one of claim 1 to claim 6, **characterized in that** the said resin component is the polypropylene.

8. The foamed material according to any one of claim 1 to claim 7, **characterized in that** in the said resin component, 0.2 or more weight parts of the antioxidant is added to every 100 weight parts of the said resin component.

9. The foamed material according to claim 8, **characterized in that** the said antioxidant is the mixture of the phenol-based antioxidant and the phosphate-based antioxidant in the weight ratio of 1/2.

10. The foamed material according to claim 8 or claim 9, **characterized in that** the said antioxidant has a lower melting point than the resin component.

11. The foamed material according to any one of claim 1 to claim 7, **characterized in that** in the said resin component, 5 weight parts of the fire-retardant are added to every 100 weight parts of the said resin component.

12. The foamed material according to claim 11, **characterized in that**, the said fire-retardant contains any one of the phosphorus-based, bromine-based, chlorinated paraffin and antimony trioxide fire-retardant.

13. The foamed material according to any one of claim 1 to claim 12, **characterized in that** in the said resin component, 0.2~0.5 weight parts of fatty acid amide lubricant is added to every 100 weight parts of the said resin component.

14. The foamed material according to any one of claim 1 to claim 7, **characterized in that** in the said resin component, 1-2 weight parts of the talc are added to every 100 weight parts of the said resin component

15. The foamed material in the thermal insulator according to any one of claim 1 to claim 14, **characterized in that** the water is used as the said foaming fluid.

16. The foamed material in the thermal insulator according to any one of claim 1 to claim 15, **characterized in that** the expansion ratio of the said foamed material is in the range of 20 times to 100 times.

17. A method for producing the foamed material, **characterized in that** the foamed material is produced by mixed-refining the foaming material, which contains less than 50 weight % of resin component and more than 50 weight % of non resin component in total being 100 weight %, with water as the foaming fluid, and then steam-foaming.

18. A cushioning material **characterized in that** it is constituted by the foamed material according to any one of claim 1 to claim 16.

19. A thermal insulating material **characterized in that** it is constituted by the foamed material according to any one of claim 1 to claim 16.

20. A thermal insulating material **characterized in that** it is constituted by the formed material obtained by foaming the foaming material that contains the polyolefin-based resins with the foaming fluid, wherein the said foaming material contains at least one of the starch or poly-vinyl alcohol, the polyolefin-based resin and the cellulose, and the content of the mixture constituted by at least one of the starch or poly-vinyl alcohol and the cellulose in the said foaming material is 50 weight % or more.

21. The thermal insulating material according to claim 20, **characterized in that** the said foaming material contains antioxidant having melting point lower than the polyolefin-based resin.

22. The thermal insulating material according to claim 21, **characterized in that** the content of the said antioxidant is 1.5wt% or less based on the weight of the foaming material.

23. The thermal insulating material according to any one of claim 21 to 22, **characterized in that** the said cellulose is the waste paper pulverized into powder or granule.

24. The thermal insulating material according to any one of claim 21 to 23, **characterized in that** the said foaming fluid is water.

25. The thermal insulating material according to any one of claim 21 to 24, **characterized in that** the expansion ratio of the said foamed material is in the range of 20 times to 100 times.

26. A wall structure of building in which the thermal insulating material is provided between the inner wall surface material and the external wall surface material, **characterized in** the said thermal insulating material consists of the foamed material prepared by foaming the foaming materials which contains the resin component, the cellulose and the starch with the water, and in the forming material, the weight ratio of the said cellulose is largest.

27. The wall structure of the building according to claim 26, **characterized in that** a moisture permeable surface material, which is exposed to the indoor, is provided on the indoor side in the said inner wall surface material.

28. The wall structure of the building according to claim 26 or 27, **characterized in that** a moisture permeable and waterproof seat is provided on the outdoor side of the said external wall surface material.

29. The wall structure of the building according to claim 26 or 28, **characterized in that** the said thermal insulating material can be plates with different thickness and plural types. ,
